# EUROPÄISCHE PATENTANMELDUNG

(11) **EP 0 904 911 A1**
(43) Veröffentlichungstag der Anmeldung: **31.03.1999**
(21) Anmeldenummer: 98810605.0
(22) Anmeldetag: 30.06.1998
(51) Int. Cl.: B29C 35/00, B29C 45/78, B29C 45/73, B29C 47/92

(54) **Verfahren und Gerät zum Temperieren eines Verbrauchers mit Hilfe eines Temperiermittels**

(30) Priorität: 30.09.1997 CH 2285/97
(71) Anmelder: Regloplas AG, 9006 St. Gallen (CH)
(72) Erfinder: Hälg, André, 9016 St. Gallen (CH)
(74) Vertreter: Kulhavy, Sava, Dipl.-Ing.

(57) **Zusammenfassung**

Das Gerät, welches an einen Verbraucher (1) angeschlossen ist, umfasst einen Behälter (5) für die Aufnahme eines Temperiermittels, wobei sich in diesem Behälter eine Heizvorrichtung (6) befindet. Der Behälter (5) ist mittels einer Rohrleitung (2) an den Verbraucher (1) angeschlossen, wobei ein Ventil (10) in dieser Verbindungsleitung (2) zwischengeschaltet ist. Eine Rohrleitung (11) zur Zuführung von kaltem Temperiermittel zum Behälter (5) ist an diesen angeschlossen. Eine Abflussleitung (12) ist an den Auslauf des Verbrauchers (1) angeschlossen. Ferner umfasst dieses Gerät eine Schaltungsanordnung zur Steuerung der Funktion des Ventils (10). Das Temperiermittel wird dem Verbraucher (1) schubweise zugeführt.

## Beschreibung

Die vorliegende Erfindung betrifft ein Verfahren zum Temperieren eines Verbrauchers mit Hilfe eines Temperiermittels sowie ein Gerät zur Durchführung dieses Verfahrens.

Als Verbraucher kommen im vorliegenden Fall beispielsweise Spritzgiessformen, Extruder usw. in Frage. Bei Verbrauchern dieser Art treten während des Betriebes derselben unterschiedliche Temperaturen auf und die Hauptaufgabe eines Temperiergerätes ist, den Verbraucher auf seine Soll-Temperatur zu bringen bzw. ihn auf dieser Temperatur zu halten. Die bisherigen Temperiergeräte haben einen geschlossenen Kreislauf für den Wärmeträger. Dieser Wäremträger wird nachstehenden auch als Temperiermittel bezeichnet. Im genannten Kreislauf ist neben dem Temperiergerät und dem Verbraucher auch eine Umwälzpumpe geschaltet. Die Umwälzpumpe ist ununterbrochen im Betrieb, so dass das Temperiermittel im genannten Kreislauf ständig zirkuliert.

Steigt beispielsweise die Temperatur des Temperiermittels bzw. des Verbrauchers während des Betriebes über den am Geräteregel eingestellten Sollwert, öffnet ein Ventil am sich im Tank befindlichen Kühler und es fliesst solange Kühlwasser durch den Kühler, bis die Temperatur des Temperiermittels bzw. des Verbrauchers wieder den Sollwert erreicht hat. Soll geheizt werden, wird über ein Schütz die im Tank befindliche Heizung eingeschaltet, bis die Ist-Temperatur des Temperiermittels bzw. des Verbrauchers wieder den am Regler des Gerätes eingestellten Sollwert erreicht hat. Der Kühler und die Heizung werden von dem sich im Tank befindlichen Temperiermittel umflossen, welches von der Pumpe zum Verbraucher und von dort wieder zurück in den Tank gefördert wird. Der ununterbrochene Betrieb der Umwälzpumpe bereitet Probleme unterschiedlicher Art. Ausserdem erfordert diese vorbekannten Art der Temperierung einen Wärmetauscher im genannten Behälter.

Die Aufgabe der vorliegenden Erfindung ist, die genannten sowie weitere Nachteile des Standes der Technik zu beseitigen.

Diese Aufgabe wird erfindungsgemäss durch ein Verfahren gelöst, welches im kennzeichnenden Teil des Patentanspruchs 1 definiert ist. Die genannten Aufgabe wird auch durch ein erfindungsgemäss es Temperiergerät gelöst, welches im kennzeichnenden Teil des Patentanspruchs 7 definiert ist.

Nachstehend werden Ausführungsformen der vorliegenden Erfindung anhand der beiliegenden Zeichnungen näher erläutert. Es zeigt:
Fig. 1 schematisch eine erste Ausführung des vorliegenden Temperiergerätes,
Fig. 2 schematisch eine zweite Ausführung des vorliegenden Temperiergerätes und
Fig. 3 schematisch eine dritte Ausführung des vorliegenden Temperiergerätes.

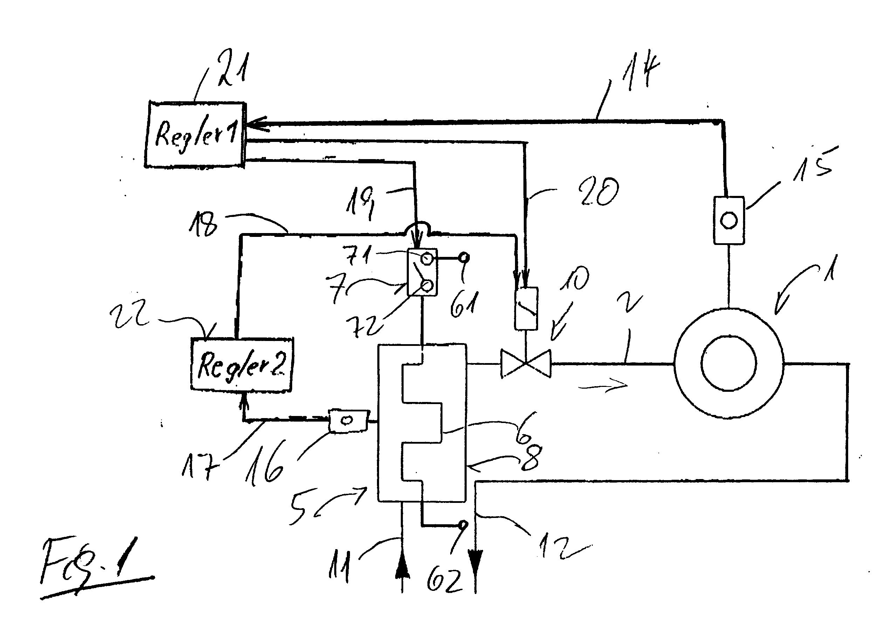

Das vorliegende Gerät dient zum Temperieren von Verbrauchern 1, beispielsweise von Spritzgiessformen, Extrudern usw. Der Eingang des Verbrauchers 1 (Fig. 1) ist über eine Rohrleitung 2 an den Ausgang eines Behälters 5 für die Aufnahme eines Wärmeträgers angeschlossen. Dieser Wärmeträger wird im Nachstehenden auch Temperiermittel genannt und dieses ist eine Flüssigkeit, z.B. Wasser. Der Behälter 5 hat einen Grundkörper 8, welcher mit Anschlusstellen für Rohrleitungen versehen ist. Die bereits erwähnte Rohrleitung 2 ist einer dieser Anschlusstellen zugeordnet.

Im Behälter 5 ist eine Heizvorrichtung 6 untergebracht, welche als ein elektrischer Heizkörper ausgeführt ist. Diese Heizvorrichtung 6 hat Anschlüsse 61 und 62, über welche die Heizvorrichtung 6 an das elektrische Speisenetz anschliessbar ist. Diese Anschlüsse 61 und 62 gehen durch die Wand des Behälters 5 flüssigkeitsdicht hindurch. In einem dieser Anschlüsse 61 ist ein Schütz 7 geschaltet. Die Kontaktstücke 71 und 72 dieses Schützes 7 sind im Anschlussleiter 61 zwischengeschaltet.

Das Gerät umfasst ferner eine Rohrleitung 11 für die Zufuhr von kaltem Wärmeträger, welche an einen Einlass des Behälters 5 angeschlossen ist. Das andere Ende dieser Zuführleitung 11 kann an eine Wasserleitung angeschlossen sein, wenn das Temperiermittel Wasser ist. Ferner umfasst dieses Gerät eine Abflussleitung 12 für das Temperiermittel, welche an den Auslauf des Verbrauchers 1 angeschlossen ist. Durch diese Leitung 12 verlässt das überschüssige Temperiermittel das Gerät. Der aus diesen Rohrleitungen 2, 11 und 12 bestehende Kreislauf ist somit offen.

In der Rohrleitung 2 ist ein elektromagnetisch betätigtes Ventil 10 zwischengeschaltet, welches einen gesteuerten Fluss des Temperiermittels vom Behälter 5 zum Verbraucher 1 ermöglicht. Dieses dem Verbraucher 1 vorgeschaltete Ventil 10 ist derart steuerbar, dass das Temperiermittel dem Verbraucher 1 nur so lange zugeführt wird, bis der Verbraucher 1 seine Soll-Temperatur erreicht hat.

Schliesslich umfasst das vorliegende Gerät auch eine Schaltungsanordnung, welche den Fluss des Temperiermittels vom Behälter 5 zum Verbraucher 1 steuert. Diese Schaltungsanordnung umfasst einen ersten Temperaturfühler 15, welcher dem Verbraucher 1 zugeordnet ist und die Temperatur dieses bzw. des Temperiermittels in diesem misst. Dieser erste Temperaturfühler 15 ist über eine erste Leitung 14 an einen Eingang eines ersten Reglers 21 angeschlossen.

Die Schaltungsanordnung umfasst ferner einen zweiten Temperaturfühler 16, welcher dem Behälter 5 zugeordnet ist und die Temperatur dieses bzw. des Temperiermittels in diesem misst. Dieser zweite Temperaturfühler 16 ist über eine zweite Leitung 17 an den Eingang eines zweiten Reglers 22 geführt. Der Ausgang dieses zweiten Reglers 22 ist über eine dritte Leitung 18 an einen ersten Eingang des Ventils 10 angeschlossen. Ein erster Ausgang des ersten Reglers 21 dient zur Steuerung des Schützes 7, wozu der genannte Ausgang mit Hilfe einer vierten Leitung 19 an das Schütz 7 angeschlossen ist. Ein zweiter Ausgang des ersten Reglers 21 ist über eine fünfte Leitung 20 an einen zweiten Eingang des Ventils 10 angeschlossen.

Im Unterschied zum Stand der Technik wird das Temperiermittel beim vorliegenden Gerät dem Verbraucher 1 nur schubweise zugeführt, d.h. mit zwischenzeiltichem Stillstand des Zuflusses des Temperiermittels. Das Temperiermittel wird dem Verbraucher 1 nur dann zugeführt, wenn dessen Ist-Temperatur geändert werden soll. Das Temperiermittel wird dem Verbraucher erhitzt oder kalt zugeführt, je nach dem, ob der Verbraucher 1 geheizt oder gekühlt werden soll.

Angenommen, die Soll-Temperatur des Verbrauchers 1 liege bei 50 Grad Celsius. Es sei ferner angenommen, dass der erste Temperaturfühler 15 während des Betriebes des Verbrauchers festgestellt hat, dass die Temperatur des Verbauchers bei 60 Grad Celsius liegt. Dies wird dem ersten Regler 21 gemeldet und dieser betätigt das Ventil 10, und zwar über die fünfte Leitung 20 so, dass kaltes Temperiermittel, welches beispielsweise eine Temperatur von 20 Grad Celsius hat, durch die Zuführleitung 11 in den Behälter 5 und dann durch die Verbindungsleitung 2 sowie durch das Ventil 10 zum Verbraucher 1 fliesst.

Im Verbraucher 1 vermischt sich das kalte Temperiermittel mit dem hier bereits vorhandenen, zu heissen Temperiermittel. Das kalte Temperiermittel wird dem Verbraucher 1 so lange zugeführt, d.h. der erste Regler 21 hält das Ventil 10 so lange offen, bis der Verbraucher 1 wieder die Soll-Temperatur erreicht hat. Das kalte Temperiermittel wird somit in einer derartigen Menge bzw. dem Verbraucher 1 so lange zugeführt, bis dieser auf die Soll-Temperatur abgekühlt wird. Nachdem die Temperatur des Verbrauchers 1 den Sollwert erreicht hat, schliesst der erste Regler 21 das Ventil 10, so dass kein heisses Temperiermittel mehr zum Verbraucher 1 fliessen kann. Das überschüssige Temperiermittel verlässt diese Anordnung durch die Abflussleitung 12.

Nehmen wir jetzt dagegen an, dass die Temperatur des Verbrauchers 1 unter der genannten Soll-Temperatur liegt. Dies kann beispielsweise dann der Fall sein, wenn der Verbraucher 1 auf Produktionstemperatur gebracht werden soll. Das Ventil 10 ist geschlossen. Nach dem Einschalten meldet der erste Temperaturfühler 15 über die erste Leitung 14 an den erste Regler 21, dass die Temperatur des Verbrauchers 1 unter der Betriebstemperatur liegt. Der erste Regler 21 betätigt über die vierte Leitung 19 das Schütz 7 so, dass die Heizvorrichtung 6 in Betrieb gesetzt wird. Dadurch wird das sich im Behälter 5 befindliche Temperiermittel durch die Heizvorrichtung 6 erhitzt.

Der zweite Temperaturfühler 16 überwacht die Temperatur des Temperiermittels im Behälter 5. Die Temperatur des Temperiermittels im Behälter 5 steigt, bis sie einen ausreichend hohen Wert erreicht hat. Dieser Wert kann beispielsweise bei 90 Grad Celsius liegen. Der zweite Temperaturfühler 16 gibt diese Temperatur des Temperiermittels an den zweiten Regler 22 über die zweite Leitung 17. Nachdem die Temperatur des Temperiermittels diesen vorgegebenen Wert erreicht hat, öffnet der zweite Regler 22 über die dritte Leitung 18 das Ventil 10, so dass das heisse Temperiermittel zum Verbraucher 1 fliessen kann. Im Verbraucher 1 erfolgt die vorstehend beschriebene Vermischung des zugeführten Temperiermittels mit dem sich im Verbraucher 1 bereits befindlichen Temperiermittel.

Das aus dem Behälter 5 weggeflossene, heisse Temperiermittel wird durch kaltes Temperiermittel ersetzt, welches durch die Zuführleitung 11 in den Behälter 5 gelangt. Dieses kalte Temperiermittel vermischt sich mit dem heissen und im Behälter 5 bereits vorhandenen Temperiermittel. Dadurch sinkt die Temperatur dieses Gemisches im Behälter 5 und der zweite Temperaturfühler 16 meldet dies an den zweiten Regler 22. Nachdem die Temperatur des genannten Gemisches auf einen vorgebenen unteren Wert absank, beispielsweise auf 80 Grad Celsius, schliesst der zweite Regler 22 das Ventil 10, wodurch die Zufuhr des Temperiermittels zum Verbraucher 1 unterbrochen wird. Von nun an kann jedoch auch kein kaltes Temperiermittel mehr durch die Zuführleitung 11 in den Behälter 5 nachfliessen. Das im Behälter 5 vorhandene Temperiermittel kann jetzt auf die vorgesehene obere Temperatur erhitzt werden, weil der Heizkörer 6 immer noch im Betrieb ist.

Erst nachdem das Temperiermittel im Behälter 5 die obere vorgeschriebene Temperatur von beispielsweise 90 Grad Celsius erreicht hat, wird das Ventil 10 in der beschriebenen Weise wieder geöffnet. Das Ventil 10 wird durch den zweiten Regler 22 so angesteuert, dass das Ventil 10 jedesmal öffnet, wenn das sich im Behälter 5 befindliche Wasser seine obere Temperatur von z.B. 90 Grad Celsius erreicht hat. Dieser schubweise Aufheizvorgang wiederholt sich so lange, bis der Verbrauchers 1 die vorgeschriebene Betriebstemperatur erreicht hat. Danach schliesst der zweite Regler 22 das Ventil 10, so dass kein heisses Temperiermittel mehr zum Verbraucher 1 fliessen kann.

Folglich wird das heisse Temperiermittel dem Verbraucher 1 auch in diesem Falls in einer derartigen Menge bzw. so lange zugeführt, bis der Verbraucher 1 seine Soll-Temperatur erreicht hat. In diesem Fall wird das Temperiermittel jedoch auf eine vorbestimmte Temperatur erhitzt, bevor es dem Verbraucher 1 zugeführt wird. Die Temperatur des Temperiermittels im Behälter 5 liegt in diesem Fall zweckmässigerweise höher als der Sollwert der Temperatur im Verbraucher 1.

Die Zuführleitung 11 ist bei der beschriebenen Ausführungsform des vorliegenden Gerätes an ein Wasserversorgungnetzt angeschlossen. Der Druck, welcher im Versorgungsnetz herrscht, verursacht den Umflauf des Kühlmittels durch die Leitungen 11, 2 und 12 usw.

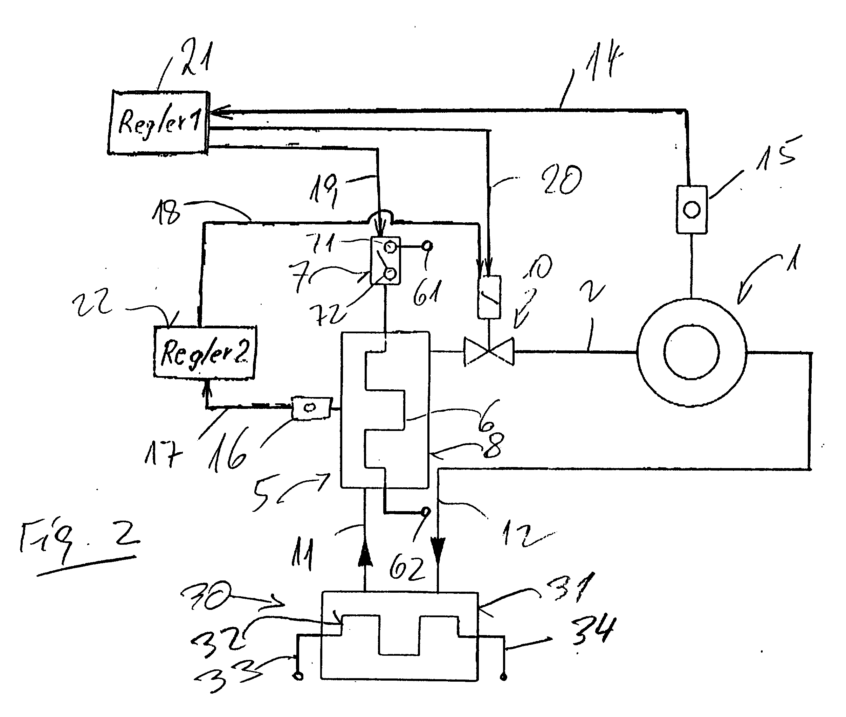

In Fällen, in welchen der Verbraucher 1 hauptsächlich gekühlt werden soll, kann eine zweite Ausführungsform des vorliegenden Gerätes verwendet werden (Fig. 2). Bei dieser zweiten Ausführungsform des vorliegenden Gerätes ist ein Kühler 30 vorgesehen, in welchem das aus dem Verbraucher 1 durch den Leitungsabschnitt 12 abfliessende heisse Temperiermittel abgekühlt wird.

Der Kühler 30 weist ein Gehäuse 31 auf, an welches die Leitungsabschnitte 11 und 12 des genannten Kreislaufes, d.h. des primären Kreislaufes fluidmässig angeschlossen sind. Folglich geht das von der Abflussleitung 12 angekommene heisse Temperiermittel durch das Gehäuse 31 zur gegenüberliegenden Zuführleitung 11 des Primärkreislaufes hindurch, wo das Temperiermittel den Kühler 30 durch die Zufuhrleitung 11 des Primärkreislaufes verlässt.

Im Inneren des Kühlers 30 ist eine Kühlschlange 32 untergebracht, deren Endpartien 33 und 34 durch die Wände des Kühlergehäuses 31 fluiddicht hindurchgehen. An diese Endpartien 33 und 34 ist ein weiterer Verbraucher (nicht dargestellt) angeschlossen. Im Inneren der Kühlschlange 32 und somit auch im Inneren des die Kühlschlange 32 umfassenden Sekundärkreislaufs befindet sich ein Fluid, mit dessen Hilfe die dem Temperiermittel entnommene Wärme dem zweiten Verbraucher zugeführt werden kann. Das abgekühlte Temperiermittel wird dann durch den Leitungsabschnitt 11 in den Primärkreislauf wieder eingeführt. Die Zirkulation des Kühlmittels in diesem Gerät wird durch die Thermosyphonwirkung verursacht.

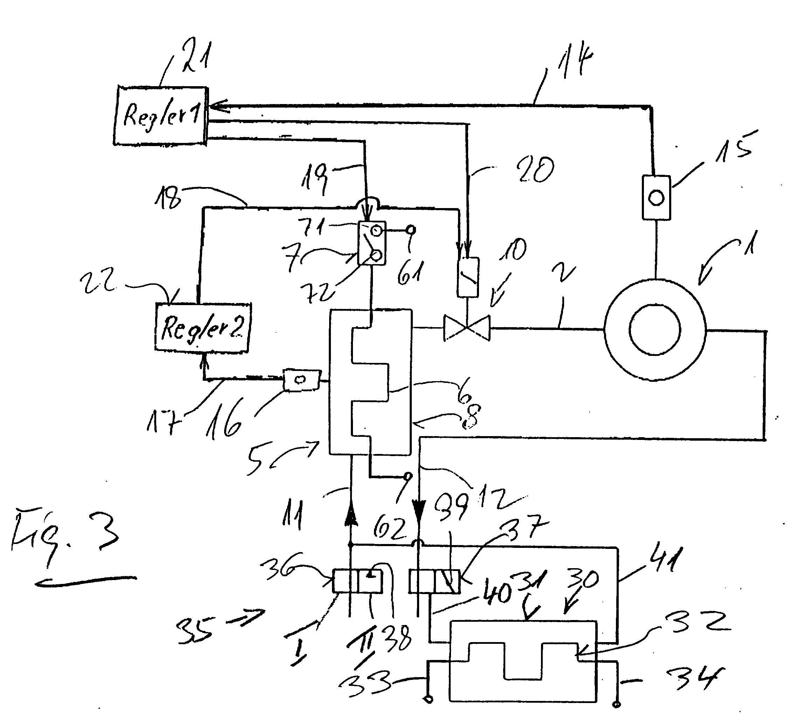

Bei einer dritten Ausführungsform des vorliegenden Gerätes (Fig. 3) sind die zwei vorstehend beschriebenen Ausführungsformen des Gerätes unter Verwendung von Schaltelementen miteinander kombiniert. In den Leitungsabschnitten 11 und 12 des Primärkreises sind miteinander gekoppelte bewegliche Teile 36 und 37 eines Ventils 35 zwischengeschaltet. Jene Abschnitte der beweglichen Teile 36 und 37 des Ventils 35, welche der ersten Schaltstellung I des Ventils 35 entsprechen, sind durchgängig ausgeführt, so dass das Temperiermittel so fliesst, wie dies im Zusammenhang mit Fig. 1 beschrieben ist.

Jener Abschnitt des ersten beweglichen Teiles 36 des Ventils 35, welcher der zweiten Schaltstellung II des Ventils 35 entspricht, ist als eine Absperrung 38 ausgeführt, sodass kein Fluid durch das Ventil 35 in die Zuführleitung 11 fliessen kann, wenn sich das Ventil 35 in der zweiten Schaltstellung II befindet. Jener Abschnitt des zweiten beweglichen Teiles 37 des Ventils 35, welcher der zweiten Schaltstellung II des Ventils 35 entspricht, weist einen Schrägkanal 38 auf. Dieser Schrägkanal 39 verbindet die Ausführleitung 12 des Primärkreislaufes mit einer ersten Zwischenleitung 40, welche andernends an das Gehäuse 31 des Kühlers 30 angeschlossen ist. Eine zweite Zwischenleitung 41, welche einerends an das Kühlergehäuse 31 angeschlossen ist, ist andernends an die Zuführleitung 11 des Primärkreises angeschlossen.

Wenn sich die beweglichen Teile 36 und 37 des Ventiles 35 in ihrer zweiten Stellung II befinden, dann fliesst das heisse Temperiermittel aus der Ausführleitung 12 des Primärkreislaufes durch den Schrägkanal 39 im zweiten Teil 37 des Ventils 35 sowie durch die erste Zwischenleitung 41 in das Kühlergehäuse 31. Hier gibt das Temperiermittel seine Wärmeenergie an die Kühlschlange 32 und somit auch an den Sekundärkreislauf ab. Das abgekühlte Temperiermittel fliesst dann aus dem Kühler 30 durch die zweite Zwischenleitung 41 zur Zuführleitung 11 im Primärkreislauf zurück. Durch die Verstellung des Ventiles 35 kann man somit entweder die hier zuerst beschriebene Arbeitsweise oder die im Zusammenhang mit Fig. 2 beschriebene Arbeitsweise des Gerätes wählen.

Der Primärkreislauf des vorliegenden Gerätes umfasst unter anderem den Verbrauher 1, den Behälter 5 für die Aufnahme des Temperiermittels, die Verbindungsleitung 2, welche sich zwischen dem Verbraucher 1 und dem Behälter 5 erstreckt, sowie die Leitungen 11 und 12. Das Ventil 10 ist in diesem Primärkreislauf geschaltet. Dabei kann das Ventil 10 in der den Verbraucher 1 mit dem Behälter 5 verbindenden Leitung 2 zwischengeschaltet sein (Fig. 1). Oder das Ventil 10 kann in jener Leitung 11 zwischengeschaltet sein, durch welche das kalte Temperiermittel in den Behälter 5 geführt werden kann (nicht dargestellt). Diese Ausführugsform unterscheidet sich von der Ausführungsform gemäss Fig. 1 lediglich dadurch, dass das Ventil 10 in der Zufuhrleitung 11 zwischengeschaltet ist. Die übrigen Verbindungen unter den in Fig. 1 dargestellten Bestandteilen des vorliegenden Gerätes sind so, wie sie in Fig. 1 dargestellt sind.

## Patentansprüche

1. Verfahren zum Temperieren eines Verbrauchers mit Hilfe eines Temperiermittels, dadurch gekennzeichnet, dass das Temperiermittel dem Verbraucher (1) schubweise zugeführt wird.

2. Verfahren nach Patentanspruch 1, dadurch gekennzeichnet, dass das Temperiermittel dem Verbraucher nur dann zugeführt wird, wenn die Ist-Temperatur des Verbrauchers geändert werden soll.

3. Verfahren nach Patentanspruch 2, dadurch gekennzeichnet, dass das Temperiermittel erhitzt oder kalt dem Verbraucher zugeführt wird, und zwar je nach dem, ob der Verbraucher erhitzt oder gekühlt werden soll.

4. Verfahren nach Patentanspruch 3, dadurch gekennzeichnet, dass kaltes Temperiermittel in einer derartigen Menge bzw. so lange dem Verbraucher zugeführt wird, bis dieser auf die Soll-Temperatur abgekühlt wird.

5. Verfahren nach Patentanspruch 3, dadurch gekennzeichnet, dass das Temperiermittel zunächst erhitzt und erst dann in einer derartigen Menge bzw. so lange dem Verbraucher zugeführt wird, bis der Verbraucher auf die Soll-Temperatur erhitzt wird.

6. Verfahren nach Patentanspruch 5, dadurch gekennzeichnet, dass das Temperiermittel auf eine obere vorbestimmte Temperatur erhitzt wird, bevor es dem Verbraucher zugeführt wird, und dass diese Temperatur zweckmässigerweise höher liegt als der Sollwert der Temperatur im Verbraucher.

7. Verfahren nach Patentanspruch 6, dadurch gekennzeichnet, dass das Temperiermittel dem Verbraucher während eines Schubes jeweils nur so lange zugeführt wird, bis die Temperatur des erhitzten Temperiermittels wegen dem nachfliessenden kalten Temperiermittel auf eine vorbestimmte Temperatur abgesunken ist, und dass die Zufuhr des Temperiermittels zum Verbraucher während dieses Schubes erst dann wieder beginnt, nachdem das Temperiermittel die vorgebene obere Temperatur erreicht hat.

8. Gerät zur Durchführung des Verfahrens nach Patentanspruch 1, dadurch gekennzeichnet, dass ein Ventil (10) dem Verbraucher (1) vorgeschaltet ist und dass dieses Ventil derart steuerbar ist, dass das Temperiermittel dem Verbraucher so lange zugeführt wird, bis der Verbraucher seine Soll-Temperatur erreicht hat.

9. Gerät nach Patentanspruch 8, dadurch gekennzeichnet, dass ein Behälter (5) für die Aufnahme des Temperiermittels vorgesehen ist, dass eine Heizvorrichtung (6) in diesem Behälter untergebracht ist, dass ein Ausgang des Behälters (5) mittels einer Rohrleitung (2) an einen Eingang des Verbrauchers (1) angeschlossen ist, dass eine Leitung (11) zur Zuführung des kalten Temperiermittels in den Behälter (5) an diesen angeschlossen ist, dass eine Abflussleitung (12) für das überschüssige Temperiermittel an einen Auslauf des Verbrauchers (1) angeschlossen ist, dass die genannten Bestandteile zu einem Primärkreislauf des vorliegenden Gerätes gehören, dass das Ventil (10) in diesem Primärkreislauf geschaltet ist und dass eine Schaltungsanordnung zur Steuerung des Ventils (10) vorgesehen ist.

10. Gerät nach Patentanspruch 9, dadurch gekennzeichnet, dass das Ventil (10) in jener Leitung (2) zwischengeschaltet ist, welche den Behälter (5) mit dem Verbraucher (1) verbindet, oder dass das Ventil (10) in jener Leitung (11) zwischengeschaltet ist, durch welche das kalte Temperiermittel in den Behälter (5) geführt werden kann.

11. Gerät nach Patentanspruch 9, dadurch gekennzeichnet, dass die Schaltungsanordnung einen ersten Temperaturfühler (15) enthält, welcher dem Verbraucher (1) zugeordnet ist und welcher an einen Eingang eines ersten Reglers (21) angeschlossen ist, dass ein erster Ausgang (19) dieses ersten Reglers (21) an ein Schütz (7) angeschlossen ist, welches in der Speiseleitung der Heizvorrichtung 6 zwischengeschaltet ist, dass die Schaltungsanordnung ferner einen zweiten Temperaturfühler (16) enthält, welcher dem Behälter (5) zugeordnet ist und welcher an einen Eingang eines zweiten Reglers (22) angeschlossen ist, dass ein Ausgang dieses Reglers (22) an einen Eingang des Ventils (10) angeschlossen ist und dass ein zweiter Ausgang des ersten Reglers (21) an einen zweiten Eingang des Ventils (10) angeschlossen ist.

12. Gerät nach Patentanspruch 9, dadurch gekennzeichnet, dass ein Kühler (30) vorgesehen ist, dass dieser Kühler (30) ein Gehäuse (31) aufweist, an welches die Leitungen (11, 12) des Primärkreislaufes fluidmässig angeschlossen sind, dass im Inneren des Kühlergehäuses (31) eine Kühlschlange (32) untergebracht ist, deren Endpartien (33,34) durch die Wände des Kühlergehäuses (31) fluiddicht hindurchgehen und dass ein weiterer Verbraucher an die Endpartien (33,34) der Kühlschlange (32) angeschlossen ist.

13. Gerät nach Patentanspruch 11, dadurch gekennzeichnet, dass ein zweites Ventil (35) in den Leitungen (11,12) des Primärkreises geschaltet ist, dass dieses Ventil (35) miteinander gekoppelte, bewegliche Teile (36,37) aufweist, dass jeder dieser Teile (36, 37) einer der Leitungen (11, 12) des Primärkreislaufes zugeordnet ist, dass jeder der Teile (36,37) derart ausgeführt ist, dass er zumindest zwei Schaltstellungen einnehmen kann, und dass die Ventilteile (36,37) so ausgeführt sind, dass das heisse Temperiermittel entweder durch den Kühler (30) und eine Zwischenleitung (41) zur Zuführleitung (11) des Primärkreislaufes geführt werden kann oder dass das heisse Temperiermittel den Primärkreislauf verlassen kann.
